# EUROPEAN PATENT APPLICATION

(11) **EP 4 822 936 A1**
(43) Date of publication of application: **14.10.2026**
(21) Application number: 26169062.2
(22) Date of filing: 30.03.2026
(51) Int. Cl.: H02J 3/32, H02B 1/30, H02J 3/007, H02J 7/02

(54) **UNIVERSAL POWER INPUT FRONT END FOR AN ENERGY STORAGE CONTROL CABINET**

(30) Priority: 08.04.2025 US 202519173602
(71) Applicant: GE Vernova Technology GmbH, 5400 Baden (CH)
(72) Inventor: JEZIERSKI, Chester, 12309 Schenectady, New York (US)
(74) Representative: Rüger Abel IP Legal Solutions GmbH

(57) **Abstract**

A battery energy storage system (BESS) control cabinet includes one or more electrical components powered by a power supply to the BESS control cabinet; and a universal power input front end separating the power supply from the one or more electrical components and able to convert, using a transformer, a power transformer, or an isolation transformer, the power supply from any voltage outside of an operating voltage of the one or more electrical components to the operating voltage of the one or more electrical components.

## Description

### TECHNICAL FIELD

This disclosure generally relates to energy storage cabinets, and more specifically to a universal power input front end for an energy storage control cabinet.

### BACKGROUND

Control cabinets, such as for battery energy storage systems, are used in a variety of locations and applications, and therefore are powered using different standard electrical power supplies. Some electrical components used in such control cabinets cannot accept the standard power available in a given jurisdiction.

### SUMMARY

A battery energy storage system (BESS) control cabinet including: one or more electrical components powered by a power supply to the BESS control cabinet; and a universal power input front end separating the power supply from the one or more electrical components and configured to convert, using a transformer, a power transformer, or an isolation transformer, the power supply from a voltage outside of an operating voltage of the one or more electrical components to the operating voltage of the one or more electrical components.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.

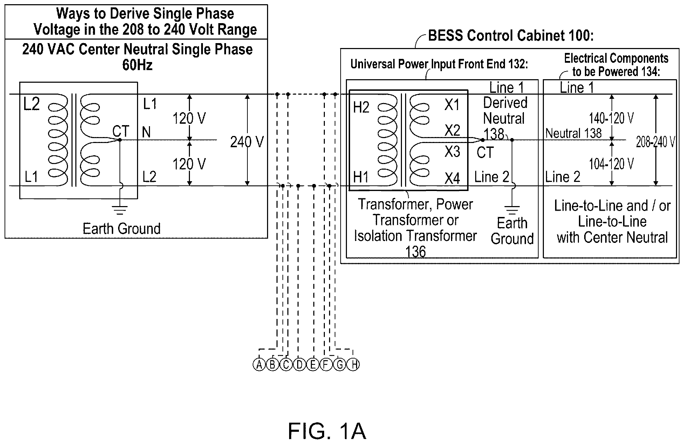

FIG. 1A shows an example battery energy storage system (BESS) control cabinet in accordance with one embodiment of the present disclosure.

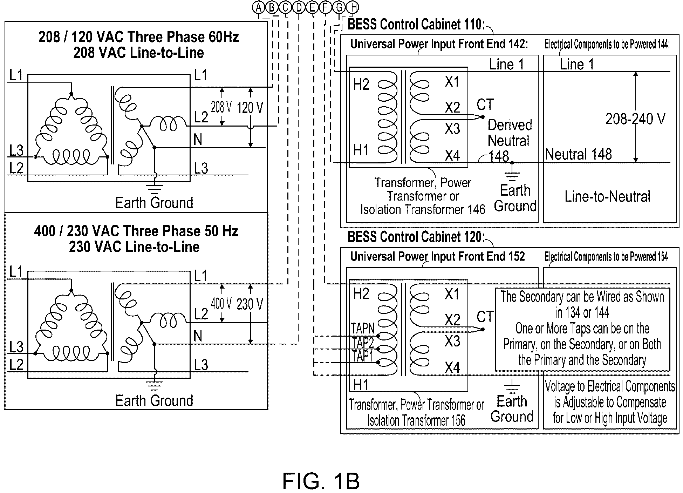

FIG. 1B shows example BESS control cabinets in accordance with one embodiment of the present disclosure.

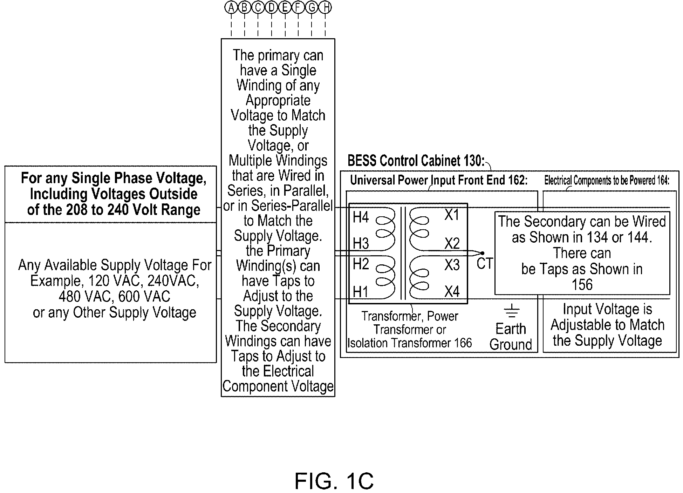

FIG. 1C shows an example BESS control cabinet in accordance with one embodiment of the present disclosure.

Certain implementations will now be described more fully below with reference to the accompanying drawings, in which various implementations and/or aspects are shown. However, various aspects may be implemented in many different forms and should not be construed as limited to the implementations set forth herein; rather, these implementations are provided so that this disclosure will be thorough and complete, and will fully convey the scope of the disclosure to those skilled in the art. Like numbers in the figures refer to like elements throughout. Hence, if a feature is used across several drawings, the number used to identify the feature in the drawing where the feature first appeared will be used in later drawings.

### DETAILED DESCRIPTION

Battery energy storage systems (BESSs) store electricity in batteries. BESS and other energy storage control cabinets are used throughout the world and therefore must be able to be powered using different standard electrical power supplies that vary in different jurisdictions. Some electrical components used in control cabinets, such as uninterruptible power supplies, AC-to-DC power supplies, servers, cooling fans, and the like, cannot accept the standard power available in a given jurisdiction.

To avoid the need for location-specific versions of a control cabinet, the present disclosure defines a universal power input front end that accepts electrical power from the major international power supplies and converts it to the power required for respective control cabinet components. Providing a universal control cabinet version keeps the working components of the control cabinet the same for operational consistency among installations in different countries. The universal cabinet version herein keeps the working components of every cabinet the same for operational consistency among installations in different countries, reduces manufacturing resources and complexity, facilitates servicing and spare parts storage, and facilitates product revisions as the power required for new components is independent of the power available in a given jurisdiction where the cabinet is installed.

Currently, many jurisdictions use a single-phase AC voltage in the range of 208-240 Volts, however, this voltage may be derived in multiple ways: (1) 208 Volts single phase derived from two lines of a 208 Volt three-phase supply; (2) 230 Volts single phase derived from line to neutral of a 400 Volt three phase supply; and (3) 240 Volts single phase derived from a single phase transformer secondary with a neutral center tap. Some cabinet control components that operate from AC voltage in the 208-240 Volt range cannot accept all of the above configurations. For example, some cabinet components require line-to-neutral voltage, some require line-to-line voltage, and some require line-to-line voltage with a center neutral. As a result, control cabinets must be designed and made in location-specific versions to accept the available electrical power in a given jurisdiction.

The present disclosure separates the voltage that powers the cabinet components from the incoming voltage. The component power may be set to the required voltage and configuration for the components, and the input power may be set to accept the voltage and configuration available at the given jurisdiction. The enhancements herein may compensate for slightly low or slightly high input voltage, and the input power may be any voltage (e.g., not limited to the 208-240 Volt range). The enhanced cabinets herein may accept any input voltage and convert it to the proper voltage for control cabinet components.

Some ways of deriving a single phase voltage in the 208-240 Volt range include a 240 VAC center neutral single phase 60 Hz power supply with a 240 VAC line-to-line connection, a 208/120 VAC three phase 60 Hz power supply with a 208 VAC line-to-line connection, and a 400/230 VAC three phase 50 Hz power supply with a 230 VAC line-to-neutral connection.

In one or more embodiments, an energy storage control cabinet may include a universal power front end and one or more electrical components to be powered. The universal power input front end may receive a power supply at a transformer, power transformer, or isolation transformer, which may convert the power supply to the required power of the one or more electrical components of the cabinet. The secondary windings of the transformer, power transformer, or isolation transformer may be wired in one of multiple ways. For example, the secondary may include two lines with a derived neutral, a single line with a derived neutral, or two lines without a derived neutral. One or more taps may be on the primary and/or the secondary windings of the transformer, power transformer, or isolation transformer. The primary may include a single winding of any appropriate voltage to match the supply voltage, or multiple windings in series, parallel, or series-parallel to match the supply voltage. The primary windings may include taps to adjust the supply voltage. The secondary windings may include taps to adjust the electrical component voltage.

FIG. 1A shows an example battery energy storage system (BESS) control cabinet in accordance with one embodiment of the present disclosure.

FIG. 1B shows example BESS control cabinets in accordance with one embodiment of the present disclosure.

FIG. 1C shows an example BESS control cabinet in accordance with one embodiment of the present disclosure.

Referring to FIGs. 1A-1C, there are multiple ways to derive single phase voltage in the range of 208-240 Volts (e.g., which may vary based on region). FIG. 1A shows a 240 VAC center neutral single phase 60Hz supply, FIG. 1B shows supplies of 208 / 120 VAC three phase 60Hz 208 VAC line-to-line, and 400/230 VAC three phase 50 Hz 230 VAC line-to-line, and FIG. 1C shows a supply of any single phase voltage (e.g., including voltages inside or outside of the range of 208-240 Volts). BESS control cabinet 100 in FIG. 1A, BESS control cabinet 110 in FIG. 1B, BESS control cabinet 120 in FIG. 1B, and BESS control cabinet 130 of FIG. 1C each may work with any of the power supplies shown in FIG. 1A and FIG. 1B.

Referring to FIG. 1A, the BESS control cabinet 100 may include a universal power input front end 132 to convert input voltage for electrical components to be powered 134. The universal power input front end 132 may include a transformer, power transformer, or isolation transformer 136 that receives the voltage supply input and converts the input voltage to a range of 208-240 Volts with an optional derived neutral 138 and/or line-to-line (Line 1, Line 2) so that the electrical components to be powered 134 receive power in a desired voltage range line-to-line and/or line-to-line with center neutral configuration(s).

Referring to FIG. 1B, the BESS control cabinet 110 may include a universal power input front end 142 to convert input voltage for electrical components to be powered 144. The universal power input front end 142 may include a transformer, power transformer, or isolation transformer 146 that receives the voltage supply input and converts the input voltage to a range of 208-240 Volts with a derived neutral 148 and a line-to-neutral configuration so that the electrical components to be powered 144 receive power in a desired voltage range.

Still referring to FIG. 1B, the BESS control cabinet 120 may include a universal power input front end 152 to convert input voltage for electrical components to be powered 154. The universal power input front end 152 may include a transformer, power transformer, or isolation transformer 156 that receives the voltage supply input and converts the input voltage to a desired voltage using the line-to-line and/or line-to-line with center neutral configuration(s) and/or the line-to-neutral configuration so that the electrical components to be powered 154 receive power in a desired voltage range. The transformer, power transformer, or isolation transformer 156 may include one or more taps (e.g., Tap 1, Tap 2, . .., Tap N) on its primary and/or secondary windings.

Referring to FIG. 1C, the BESS control cabinet 130 may include a universal power input front end 162 to convert input voltage for electrical components to be powered 164. The universal power input front end 162 may include a transformer, power transformer, or isolation transformer 166 that receives the voltage supply input and converts the input voltage to a desired voltage using the line-to-line and/or line-to-line with center neutral configuration(s) and/or the line-to-neutral configuration so that the electrical components to be powered 164 receive power in a desired voltage range. The transformer, power transformer, or isolation transformer 166 may include one or more taps (e.g., Tap 1, Tap 2, . . ., Tap N) on its primary and/or secondary windings as shown in the transformer, power transformer, or isolation transformer 156 of FIG. 1B. In FIG. 1C, the single phase voltage supply may include 120 VAC, 240 VAC, 480 VAC, 600 VAC, or another supply voltage, for example.

The term "circuitry" at least in some examples refers to a circuit or system of multiple circuits configured to perform a particular function in an electronic device. The circuit or system of circuits may be part of, or include one or more hardware components, such as a logic circuit, a processor (shared, dedicated, or group) and/or memory (shared, dedicated, or group), an application-specific integrated circuit (ASIC), field-programmable gate array (FPGA), programmable logic controller (PLC), single-board computer (SBC), system on chip (SoC), system in package (SiP), multi-chip package (MCP), digital signal processor (DSP), and the like, that are configured to provide the described functionality. In addition, the term "circuitry" may also refer to a combination of one or more hardware elements with the program code used to carry out the functionality of that program code. Some types of circuitry may execute one or more software or firmware programs to provide at least some of the described functionality. Such a combination of hardware elements and program code may be referred to as a particular type of circuitry.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

Although specific embodiments of the disclosure have been described, one of ordinary skill in the art will recognize that numerous other modifications and alternative embodiments are within the scope of the disclosure. For example, any of the functionality and/or processing capabilities described with respect to a particular device or component may be performed by any other device or component. Further, while various illustrative implementations and architectures have been described in accordance with embodiments of the disclosure, one of ordinary skill in the art will appreciate that numerous other modifications to the illustrative implementations and architectures described herein are also within the scope of this disclosure.

Although embodiments have been described in language specific to structural features and/or methodological acts, it is to be understood that the disclosure is not necessarily limited to the specific features or acts described. Rather, the specific features and acts are disclosed as illustrative forms of implementing the embodiments. Conditional language, such as, among others, "can," "could," "might," or "may," unless specifically stated otherwise, or otherwise understood within the context as used, is generally intended to convey that certain embodiments could include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

## Claims

1. A battery energy storage system (BESS) control cabinet comprising:
one or more electrical components powered by a power supply to the BESS control cabinet; and
a universal power input front end separating the power supply from the one or more electrical components and configured to convert, using a transformer, a power transformer, or an isolation transformer, the power supply from a voltage outside of an operating voltage of the one or more electrical components to the operating voltage of the one or more electrical components.

2. The BESS control cabinet of claim 1, wherein the power supply is a center-neutral single phase line-to-line power supply, and wherein the universal power input front end comprises a line-to-line configuration.

3. The BESS control cabinet of claim 2, wherein the universal power input front end further comprises a center neutral in the line-to-line configuration.

4. The BESS control cabinet of claim 1, wherein the power supply is a center-neutral single phase line-to-line power supply, and wherein the universal power input front end comprises a line-to-neutral configuration.

5. The BESS control cabinet of any one of claims 2-4, wherein the universal power input front end further comprises one or more taps on at least one of a primary side or a secondary side of the transformer, the power transformer, or the isolation transformer.

6. The BESS control cabinet of claim 1, wherein the power supply is a three phase line-to-line power supply, and wherein the universal power input front end comprises a line-to-line configuration.

7. The BESS control cabinet of claim 6, wherein the universal power input front end further comprises a center neutral in the line-to-line configuration.

8. The BESS control cabinet of claim 1, wherein the power supply is a three phase line-to-line power supply, and wherein the universal power input front end comprises a line-to-neutral configuration.

9. The BESS control cabinet of any one of claims 6-8, wherein the universal power input front end further comprises one or more taps on at least one of a primary side or a secondary side of the transformer, the power transformer, or the isolation transformer.

10. The BESS control cabinet of claim 1, wherein the power supply is a three phase line-to-neutral power supply, and wherein the universal power input front end comprises a line-to-line configuration.

11. The BESS control cabinet of claim 10, wherein the universal power input front end further comprises a center neutral in the line-to-line configuration.

12. The BESS control cabinet of claim 1, wherein the power supply is a three phase line-to-neutral power supply, and wherein the universal power input front end comprises a line-to-neutral configuration.

13. The BESS control cabinet of any one of claim 10-12, wherein the universal power input front end further comprises one or more taps on at least one of a primary side or a secondary side of the transformer, the power transformer, or the isolation transformer.

14. The BESS control cabinet of any one of claim 5, 9, or 13, wherein the primary side comprises a single winding or multiple windings in parallel, series, or series-parallel matching a voltage of the power supply.

15. The BESS control cabinet of any one of claim 1-5 or 14, wherein the power supply is a single phase voltage power supply outside a range of 208-240 volts.
